(19) Europäisches Patentamt
European Patent Office
Office européen des brevets

(11) **EP 4 752 782 A1**

(12) **EUROPEAN PATENT APPLICATION**

(43) Date of publication:
**03.06.2026 Bulletin 2026/23**

(21) Application number: **25202328.8**

(22) Date of filing: **16.09.2025**

(51) International Patent Classification (IPC):
*G06F 40/30* (2020.01)

(52) Cooperative Patent Classification (CPC):
**G06F 40/30;** G06F 16/353

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **28.11.2024 IN 202421093144**

(71) Applicant: **Tata Consultancy Services Limited Mumbai, Maharashtra 400 021 (IN)**

(72) Inventors:
• **URLANA, Ashok**
**500081 Hyderabad (IN)**
• **CHARAKA, Vinayak Kumar**
**500081 Hyderabad (IN)**
• **KANUMOLU, Gopichand**
**500081 Hyderabad (IN)**
• **GARLAPATI, Bala Mallikarjunarao**
**500081 Hyderabad (IN)**
• **SINGH, Ajeet Kumar**
**382421 Gandhinagar (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD AND SYSTEM FOR REFERENCE-FREE HALLUCINATION DETECTION IN LARGE LANGUAGE MODELS**

(57) Hallucinations in LLMs pose significant challenges and it is hard to accurately identify hallucinated predictions of LLMs in the absence of references. The present disclosure utilizes sample responses from LLMs and classifies them using a model trained on Natural Language Inference (NLI) scores. The plurality of NLI scores include an entailment, a neutrality and a plurality of contradiction scores. Post computing NLI scores, an average NLI score is computed based on the plurality of NLI scores. Further, a plurality of individual response predictions are obtained by classifying the plurality of responses based on the NLI scores using a hallucination classifier. Simultaneously, overall response predictions are obtained and a confidence score is computed for the overall prediction of hallucination classifier Finally, an optimal response is predicted based on the confidence score associated with the overall prediction of the hallucination classifier and the plurality of NLI scores.

FIG. 1B

**Description**

CROSS-REFERENCE TO RELATED APPLICATIONS AND PRIORITY

The present application claims priority to Indian application no. 202421093144, filed on November 28, 2024.

TECHNICAL FIELD

The disclosure herein generally relates to the field of machine learning and, more particularly, to a method and system for reference-free hallucination detection in large language models.

BACKGROUND

Artificial Intelligence (AI) and Machine Learning (ML) models have enhanced human and machine interactions. For instance, the Large Language Model (LLM), a type of ML model, is used by a generative AI tool like ChatGPT to perform Natural Language Processing (NLP) tasks like conversationally answering questions and translating human text into computer language. However, it is very challenging to identify whether the response generated by LLM is correct or not for all the queries. Moreover, it is essential to understand whether the response generated by LLM is hallucinated or not hallucinated and what is the confidence of the prediction.

Conventionally, hallucinations in LLMs pose a significant challenge across all modalities, including text, image, audio, and video. Detecting reference-free hallucinations is particularly crucial in this context. Recent works propose an approach that involves prompting the model multiple times with its generated answers to reconstruct the query, using few shots prompting to obtain original query. One crucial drawback with this approach is answer generation happens single time, whereas query generation happens multiple times and there is high chance of obtaining incorrect queries at time of sample generations. Another approach relies on the principle that if an LLM is familiar with a topic, generating multiple sample responses should result in consistency and factual correctness. However, said method only uses the contradiction score of Natural Language Inference (NLI) to detect hallucinations. Hence there is a challenge in accurate identification of hallucinated predictions of LLMs especially when there is no reference to detect hallucination in the responses generated by LLMs.

SUMMARY

Embodiments of the present disclosure present technological improvements as solutions to one or more of the above-mentioned technical problems recognized by the inventors in conventional systems. For example, in one embodiment, a method for reference-free hallucination detection in large language models is provided. The method includes obtaining, by one or more hardware processors, a plurality of responses associated with a query by prompting a Large Language Model (LLM) for a plurality of instances. Further, the method includes computing, by the one or more hardware processors, a plurality of Natural Language Inference (NLI) scores associated with each of the plurality of responses using an NLI model, wherein the plurality of NLI scores comprises an entailment score, a neutrality score and a plurality of contradiction scores. Furthermore, the method includes computing, by the one or more hardware processors, an average NLI score based on the plurality of NLI scores associated with each of the plurality of responses. Furthermore, the method includes obtaining, by the one or more hardware processors, a plurality of individual response predictions by classifying each of the plurality of responses based on the associated plurality of NLI scores using a hallucination classifier. Furthermore, the method includes simultaneously obtaining, by the one or more hardware processors, an overall response prediction based on the average NLI scores associated with each of the plurality of responses using the hallucination classifier. Furthermore, the method includes computing, by the one or more hardware processors, a confidence score for the overall response prediction of hallucination classifier based on the plurality of individual response predictions and the overall response prediction. Finally, the method includes predicting, by the one or more hardware processors, an optimal response from among the plurality of responses based on the confidence score associated with the overall response prediction of the hallucination classifier and the plurality of NLI scores, wherein the optimal response is one of: i) a response having minimum contradiction score from among the plurality of responses if the overall response prediction is hallucinated response and ii) a response having maximum entailment score from among the plurality of responses if the overall response prediction is non-hallucinated response.

In another aspect, a system for reference-free hallucination detection in large language models is provided. The system includes at least one memory storing programmed instructions, one or more Input /Output (I/O) interfaces, and one or more hardware processors operatively coupled to the at least one memory, wherein the one or more hardware processors are configured by the programmed instructions to obtain a plurality of responses associated with a query by prompting a Large Language Model (LLM) for a plurality of instances. Further, the one or more hardware processors are configured by the programmed instructions to compute a plurality of Natural Language Inference (NLI) scores associated with each of the plurality of responses using an NLI model, wherein the plurality of NLI scores comprises an entailment score, a neutrality score and a plurality of contradiction scores. Furthermore, the one or more hardware processors are configured by the programmed instructions to compute an average NLI score based on the plurality of NLI scores associated with each of the plurality of responses. Furthermore, the one or more hardware processors are configured by the programmed instructions to obtain a plurality of individual response predictions by classifying each of the plurality of responses based on the associated plurality of NLI scores using a hallucination classifier. Furthermore, the one or more hardware processors are configured by the programmed instructions to simultaneously obtain an overall response prediction based on the average NLI scores associated with each of the plurality of responses using the hallucination classifier. Furthermore, the one or more hardware processors are configured by the programmed instructions to compute a confidence score for the overall response prediction of hallucination classifier based on the plurality of individual response predictions and the overall response prediction. Finally, the one or more hardware processors are configured by the programmed instructions to predict an optimal response from among the plurality of responses based on the confidence score associated with the overall response prediction of the hallucination classifier and the plurality of NLI scores, wherein the optimal response is one of: i) a response having minimum contradiction score from among the plurality of responses if the overall response prediction is hallucinated response and ii) a response having maximum entailment score from among the plurality of responses if the overall response prediction is non-hallucinated response.

In yet another aspect, a computer program product including a non-transitory computer-readable medium embodied therein a computer program for reference-free hallucination detection in large language models is provided. The computer readable program, when executed on a computing device, causes the computing device to obtain a plurality of responses associated with a query by prompting a Large Language Model (LLM) for a plurality of instances. Further, the computer readable program, when executed on a computing device, causes the computing device to compute a plurality of Natural Language Inference (NLI) scores associated with each of the plurality of responses using an NLI model, wherein the plurality of NLI scores comprises an entailment score, a neutrality score and a plurality of contradiction scores. Furthermore, the computer readable program, when executed on a computing device, causes the computing device to compute an average NLI score based on the plurality of NLI scores associated with each of the plurality of responses. Furthermore, the computer readable program, when executed on a computing device, causes the computing device to obtain a plurality of individual response predictions by classifying each of the plurality of responses based on the associated plurality of NLI scores using a hallucination classifier. Furthermore, the computer readable program, when executed on a computing device, causes the computing device to simultaneously obtain an overall response prediction based on the average NLI scores associated with each of the plurality of responses using the hallucination classifier. Furthermore, the computer readable program, when executed on a computing device, causes the computing device to compute a confidence score for the overall response prediction of hallucination classifier based on the plurality of individual response predictions and the overall response prediction. Finally, the computer readable program, when executed on a computing device, causes the computing device to predict an optimal response from among the plurality of responses based on the confidence score associated with the overall response prediction of the hallucination classifier and the plurality of NLI scores, wherein the optimal response is one of: i) a response having minimum contradiction score from among the plurality of responses if the overall response prediction is hallucinated response and ii) a response having maximum entailment score from among the plurality of responses if the overall response prediction is non-hallucinated response.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1A is a functional block diagram of a system for reference-free hallucination detection in large language models (LLMs), in accordance with some embodiments of the present disclosure.
FIG. 1B illustrates overall functional architecture of the system for the reference-free hallucination detection in LLMs, in accordance with some embodiments of the present disclosure.
FIG. 2A and FIG. 2B (referred to as FIG. 2) illustrates a flow diagram for a processor implemented method for reference-free hallucination detection in LLMs, in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the and scope of the disclosed embodiments.

To overcome the challenges of the conventional approaches, embodiments herein provide a method and system for reference-free hallucination detection in large language models. Any metric calculation is based on a standard universally acceptable correct answer which is known as a reference. The present disclosure does not rely on such reference answer for hallucination detection and hence called reference-free. In simple terms, evaluation is performed without having the reference. The present disclosure utilizes sample responses from LLMs and classifies them using a model trained on Natural Language Inference (NLI) scores. Moreover, the present disclosure provides the optimal response which is determined using the entailment/contradiction scores based on the hallucination classifier output.

The present disclosure initially obtains a plurality of responses associated with a query by prompting a Large Language Model (LLM) for a plurality of times. Further, a plurality of Natural Language Inference (NLI) scores associated with each of the plurality of responses is computed using an NLI model, wherein the plurality of NLI scores comprise an entailment, a neutrality and a plurality of contradiction scores. Post computing NLI scores, an average NLI score is computed based on the plurality of NLI scores associated with each of the plurality of responses. Post computing average, a plurality of individual response predictions are obtained by classifying each of the plurality of responses based on the associated plurality of NLI scores using a hallucination classifier. simultaneously, an overall response predictions are obtained based on the average NLI scores associated with each of the plurality of responses using the hallucination classifier. Further, a confidence score is computed for the overall response prediction of hallucination classifier based on the plurality of individual response predictions and the overall response prediction. Finally, an optimal response is predicted from among the plurality of responses based on the confidence score associated with the overall response prediction of the hallucination classifier and the plurality of NLI scores.

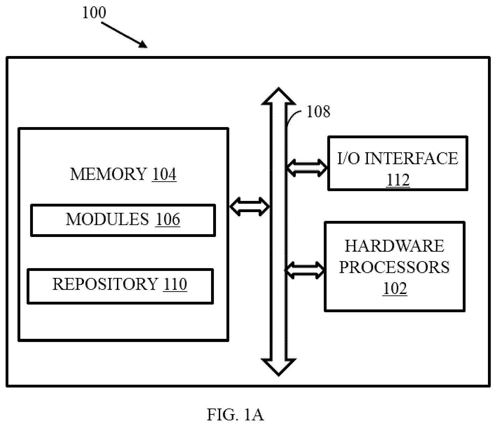

Referring now to the drawings, more particularly to FIG. 1A through FIG. 2B, where similar reference characters denote corresponding features consistently throughout the figures, there are shown preferred embodiments, and these embodiments are described in the context of the following exemplary system and/or method.

FIG. 1A is a functional block diagram of system 100 for reference-free hallucination detection in large language models, in accordance with some embodiments of the present disclosure. The system 100 includes or is otherwise in communication with hardware processors 102, at least one memory such as a memory 104, an Input /Output (I/O) interface 112. The hardware processors 102, memory 104, and the I/O interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in memory 104.

The memory 104 may include any computer-readable medium known in the art including, for example, volatile memory, such as static random-access memory (SRAM) and Dynamic Random Access Memory (DRAM), and/or nonvolatile memory, such as read only memory (ROM), erasable programmable ROM, flash memories, hard disks, optical disks, and magnetic tapes. In an embodiment, memory 104 includes a plurality of modules 106. Memory 104 also includes a data repository (or repository) 110 for storing data processed, received, and generated by the plurality of modules 106.

The plurality of modules 106 includes programs or coded instructions that supplement applications or functions performed by the system 100 for Reference-free hallucination detection in large language models. The plurality of modules 106, amongst other things, can include routines, programs, objects, components, and data structures, which perform particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for Reference-free hallucination detection in large language models.

The data repository (or repository) 110 may include a plurality of abstracted pieces of code for refinement and data that is processed, received, or generated as a result of the execution of the plurality of modules in the module(s) 106.

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such an external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory, a Relational Database Management System (RDBMS).

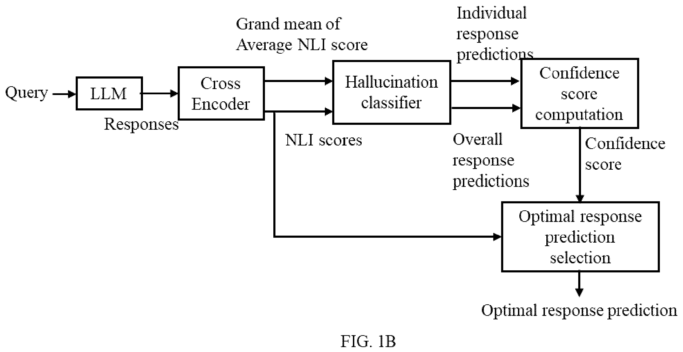

The overall architecture of the system of FIG. 1A is explained in conjunction with FIG. 1B. Now referring to FIG. 1B, the present disclosure takes query as input and pass to the large language model (LLM) and obtain plurality of responses. All the responses were sent to cross encoder and the NLI scores (entailment, neutrality, contradiction) between one response with other responses is obtained. The cross encoder is a language model which computes the scores for entailment, contradiction and neutral with the other responses from the plurality of responses. The entailment score significances how much one statement supports the other statement, and the contradiction is reverse to it, in the neutral case one statement might partially support the other statement. All NLI scores of individual responses are passed to the hallucination classifier to detect whether each response is hallucinated or not. Further, the average NLI scores of all the responses are given as input to the hallucination classifier for the overall prediction. Using the individual and overall predictions the confidence score is computed, and optimal response is selected based on the confidence score. If overall prediction is hallucinated, the least hallucinated response is chosen using the least neutrality score and chosen as the optimal response. If the overall prediction is not hallucinated, the optimal response is the one with highest entailment score.

**Entailment score:** How strongly one statement is supported by the other statement.

**Contradiction score:** How strongly one statement contradicts with the other statement.

**Neutral score:** How likely one statement is unrelated or do not directly affect the other statement.

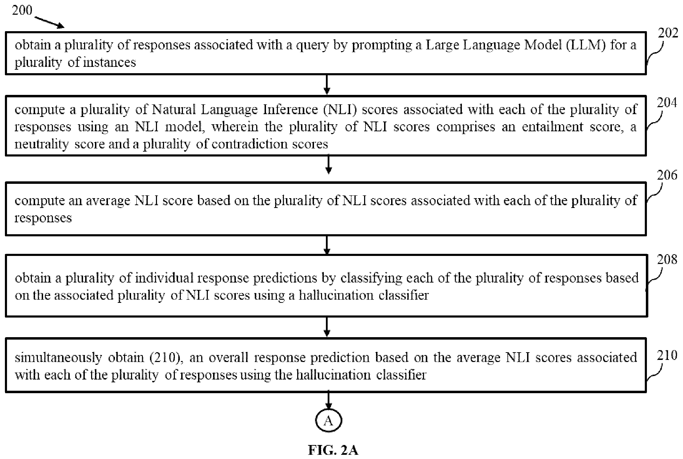

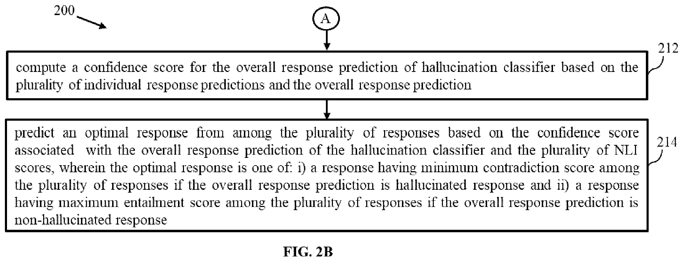

The working of the components of system 100 are explained with reference to the method steps depicted in FIG. 2.

FIGS. 2A and 2B (collectively referred to as FIG. 2) is an exemplary flow diagram illustrating a method 200 for reference-free hallucination detection in large language models implemented by the system of FIG. 1A and 1B, according to some embodiments of the present disclosure. In an embodiment, the system 100 includes one or more data storage devices or the memory 104 operatively coupled to the one or more hardware processor(s) 102 and is configured to store instructions for execution of steps of the method 200 by the one or more hardware processors 102. The steps of method 200 of the present disclosure will now be explained with reference to the components or blocks of system 100 as depicted in FIG. 1A and 1B and the steps of flow diagram as depicted in FIG. 2. The method 200 may be described in the general context of computer executable instructions. Generally, computer executable instructions can include routines, programs, objects, components, data structures, procedures, modules, functions, etc., that perform particular functions or implement particular abstract data types.

The method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented in any suitable hardware, software, firmware, or combination thereof.

The present disclosure prompts a query Q to a LLM and obtains 'k' responses $R* = R_1, R_2.......R_k$ instead of generating a single response. Where R* is the list of 'k' responses. The objective is to provide the end user 1) whether the LLM makes a hallucination or not for that particular query, 2) which response is most appropriate or useful for the end user out of all the 'k' responses, 3) what is the prediction confidence value.

Now referring to FIG. 2, at step 202 of method 200, the one or more hardware processors 102 are configured by the programmed instructions to obtain a plurality of responses associated with a query by prompting a Large Language Model (LLM) for a plurality of times. For example, a query and a corresponding plurality of responses in given in Table I.

Table I

| Question | Answers |
|---|---|
| What is the capital of Canada? | The capital city of Canada is Ottawa |
| | The capital of Canada is Ottawa |
| | Ottawa is the capital city of Canada |
| | The capital of Canada is Ottawa |
| | The capital of Canada is Ottawa |
| | The capital of Canada is Ottawa |
| | The capital of Canada is Ottawa |
| | The capital of Canada is Ottawa, located in the province of Ontario |
| | The capital of Canada is Ottawa |
| | The capital of Canada is Ottawa |

At step 204 of the method 200, the one or more hardware processors 102 is configured by the programmed instructions to compute a plurality of Natural Language Inference (NLI) scores associated with each of the plurality of responses using an NLI model, wherein the plurality of NLI scores comprise an entailment, a neutrality and a plurality of contradiction scores.

For example, the NLI scores for the plurality of responses given in Table I is given in Table II.

Table II

| Answers | NLI Scores |
|---|---|
| The capital city of Canada is Ottawa | (-4.4965, 4.2334, -0.4467) |
| The capital of Canada is Ottawa | (-3.4624, 3.2881, -0.6342) |
| Ottawa is the capital city of Canada | (-5.1365, 5.1317, -0.7701) |
| The capital of Canada is Ottawa | (-3.4624, 3.2881, -0.6342) |
| The capital of Canada is Ottawa | (-3.4624, 3.2881, -0.6342) |
| The capital of Canada is Ottawa | -3.4624, 3.2881, -0.6342) |
| The capital of Canada is Ottawa | (-3.4624, 3.2881, -0.6342) |
| The capital of Canada is Ottawa, located in the province of Ontario | (-4.3277, 4.8263, -1.1103) |
| The capital of Canada is Ottawa | (-3.4624, 3.2881, -0.6342) |
| The capital of Canada is Ottawa | (-3.4624, 3.2881, -0.6342) |

For example, input to the NLI model is a premise concatenated with a hypothesis, wherein premise is a response among the plurality of responses, and hypothesis is remaining responses among the plurality of responses. Each of the plurality of individual response predictions and the overall response prediction are one of a) hallucinated response and b) non-hallucinated response.

At step 206 of the method 200, the one or more hardware processors 102 is configured by the programmed instructions to compute an average NLI score based on the plurality of NLI scores associated with each of the plurality of responses. For example, the average NLI scores of the example given in Table II is [-3.8197, 3.7208, -0.6766].

$$e_{ij} = P(Entailement | R_i, R_{i+1...k})$$

$$= \frac{\exp(Z_e)}{(\exp(Z_e) + \exp(Z_n) + \exp(Z_c))} \ldots (1)$$

$$n_{ij} = P(Entailement|R_i, R_{i+1...k})$$

$$= \frac{\exp(Z_n)}{(\exp(Z_e) + \exp(Z_n) + \exp(Z_c))} \quad \dots (2)$$

$$c_{ij} = P(Entailement|R_i, R_{i+1...k})$$

$$= \frac{\exp(Z_c)}{(\exp(Z_e) + \exp(Z_n) + \exp(Z_c))} \quad \dots (3)$$

Considering the above 3 equations, $Z_e$, $Z_n$, and $Z_c$ are the logits of the entailment, neutral, and contradiction scores. Each response in the R* will be compared to other responses and obtain the corresponding NLI scores. The entailment, neutral, and contradiction scores for each response is averaged. For single response Ri, Average NLI scores is as given in equation (4), where L represents the total number of responses in the R*. Further, all responses Avg NLI scores for given query is given in equation (5).

$$Average\ NLI\ scores = \begin{cases} E_i^{avg} = \frac{1}{L}\sum_{j=1, j\neq i}^{k} e_{ij} \\ N_i^{avg} = \frac{1}{L}\sum_{j=1, j\neq i}^{k} n_{ij} \\ C_i^{avg} = \frac{1}{L}\sum_{j=1, j\neq i}^{k} c_{ij} \end{cases} \quad \dots (4)$$

$$All\ responses\ average = \begin{cases} E_{avg} = \frac{1}{L}\sum_{j=1}^{k} E_i \\ N_{avg} = \frac{1}{L}\sum_{j=1}^{k} N_i \\ C_{avg} = \frac{1}{L}\sum_{j=1}^{k} C_i \end{cases} \quad \dots (5)$$

Referring back to FIG. 2, at step 208 of the method 200 the one or more hardware processors 102 is configured by the programmed instructions to obtain a plurality of individual response predictions by classifying each of the plurality of responses based on the associated plurality of NLI scores using a hallucination classifier.

For example, the hallucination classifier is trained as follows: Initially, a plurality of queries are obtained from a plurality of publicly available question-answer datasets are obtained. Further, a plurality of responses associated with each of a plurality of queries are generated by prompting a plurality of distinct LLMs and by selecting an optimal prompting strategy from among a plurality of prompting strategies.

For example, steps for selecting the optimal prompting strategy from among the plurality of prompting strategies is explained as follows. Initially, a query, an associated response from the plurality of distinct LLMs (R), an associated golden standard answer, a correlation score (CrS) and a certainty score (CnS) pertaining to the query are inputted to a large LLM. Further, a set of prompting strategies are identified from among the plurality of prompting strategies satisfying the following two conditions, (i) non zero values for R, CrS and CnS and (ii) length of the sum of R, CrS and CnS equal to a predefined threshold. Further, an average score of CrS and CnS pertaining to an identified set of prompting strategies is computed. Post computing the average, a prompting strategy is identified from among the identified set of prompting strategies with the average score of CrS and CnS greater than a predefined average threshold as the optimal prompting strategy. Further, if (i) the average score of CrS and CnS associated with two prompting strategies from among the plurality of prompting strategies are equal and greater than the third prompting strategy from among the plurality of prompting strategies or (ii) the average score of all prompts from among the plurality of prompts are equal, a prompting strategy from among the plurality of prompting strategies with less number of input tokens is identified as the optimum prompting strategy only.

Further, each of the plurality of responses are annotated into one of a) hallucinated response and b) non-hallucinated response using a trained large LLM. Post annotation, NLI scores associated with each of the plurality of responses are computed. Further, the hallucination classifier is trained based on the computed NLI scores associated with each of the plurality of responses and an annotated plurality of responses to predict hallucinated responses.

Now referring back to FIG. 2, at step 210 of the method 200, the one or more hardware processors 102 is configured by the programmed instructions to simultaneously obtain an overall response predictions based on the average NLI scores associated with each of the plurality of responses using the hallucination classifier.

At step 212 of the method 200, the one or more hardware processors 102 is configured by the programmed instructions to compute a confidence score for the overall response prediction of hallucination classifier based on the plurality of individual response predictions and the overall response prediction. For example, Optimal Response for the question is Table I is "The capital of Canada is Ottawa" and the corresponding confidence score is 100.

At step 214 of the method 200, the one or more hardware processors 102 is configured by the programmed instructions to predict an optimal response from among the plurality of responses based on the confidence score associated with the overall response prediction of the hallucination classifier and the plurality of NLI scores, wherein the optimal response is one of: i) a response having minimum contradiction score among the plurality of responses if the overall response prediction is hallucinated response and ii) a response having maximum entailment score among the plurality of responses if the overall response prediction is non-hallucinated response.

**Experimentation:** The objective of the classifier of the present disclosure is to classify whether the generated response is hallucination or not. The classifier takes the input of a list of NLI scores (entailment, neutral, and contradiction) and predicts hallucination or not. NLI scores are obtained using a cross-encoder module.

**Data preparation:** For the classifier training, open-source data is used. The questions in the dataset are related to movies, capitals and general knowledge (GK). A sample of 100 questions each from movies and GK datasets are chosen and all samples from the capitals dataset and 10 responses are generated to each question using the LLM. Further, three annotators (human or automated) classify each response as either hallucinated or not. After removing the duplicate samples for 390 questions, 3400 responses including hallucinated and non-hallucinated responses are obtained. Overall, there is a dataset of 3.4k human-annotated samples. To generate the response using LLM the temperature parameter is set as 1, max new tokens = 32, $top_p$ = 0.95, topk = 0.50.

**Classifier training:** Ensemble of classifiers modules are used to build an ensemble classifier. The entire data is split into 80% training and 20% testing and obtained 73% accuracy. Scikit-learn library is used for the classifier implementation.

**Prediction:** The present disclosure pass the grad mean NLI values obtained from Equation 5 to the hallucination classifier to obtain the final prediction, which conveys on overall for the given query a particular LLM makes a hallucinated or non-hallucinated response.

**Optimal response:** Optimal response is obtained based on prediction whether it is hallucinated or not. If the prediction is hallucinated, the sample response which is having least contradiction score is selected, where if the prediction is non-hallucinated, the random sample with highest entailment score is selected. The response formula is given in equation (6).

$$response = \begin{cases} R^*(\arg min_{i=1}^{k}(c_i^{avg}), & if\ hallucination = yes \\ R^*(\arg max_{j=1}^{k}(e_j^{avg}), & if\ hallucination = no \end{cases} \quad ......(6)$$

Confidence score: The confidence score measured using the all 'k' responses predictions and the final prediction. Let's take the 'k' responses corresponding response predictions P $_*$ = {$P_1$, $P_2$... $P_k$} and $P_{grand}$ is the final prediction for the given query and the length of total responses represents as L. Formula for computing the confidence score is given in equation (7).

$$Confidence\ score = \begin{cases} (\frac{1}{L}\sum_{i=1}^{k} p_i)*100, & if\ P_{grand} = 1 \\ 100 - (\frac{1}{L}\sum_{i=1}^{k} p_i)*100, & if\ P_{grand} = 0 \end{cases} \quad ......(7)$$

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address the unresolved problem of reference-free hallucination detection in large language models. The present disclosure provides three NLI scores (entailment, neutral, and contradiction) to train a classifier which helps in accurate prediction of hallucination. Here, the collective usage of entailment score which tells "how strongly one statement is supported by the other statement", the contradiction score, which tells "How strongly one statement contradicts with the other statement" and the neutral score, which tells "How likely one statement is unrelated or do not directly affect the other statement" is used in confidence score computation, This confidence score is used for predicting optimal response prediction. Additionally, unlike existing methods, the present disclosure provides the most appropriate response out of all the sample responses for both hallucinated and non-hallucinated predictions along with a confidence score for the prediction

It is to be understood that the scope of the protection is extended to such a program and in addition to a computer-readable means having a message therein such computer-readable storage means contain program-code means for implementation of one or more steps of the method when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means, and software means. The method embodiments described herein could be implemented in hardware and software. The device may also include software means. Alternatively, the embodiments may be implemented on different hardware devices, e.g., using a plurality of CPUs, GPUs and edge computing devices.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise. Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e. non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

**1.** A processor-implemented method (200), the method comprising:

obtaining (202), by one or more hardware processors, a plurality of responses associated with a query by prompting a Large Language Model (LLM) for a plurality of instances;

computing (204), by the one or more hardware processors, a plurality of Natural Language Inference (NLI) scores associated with each of the plurality of responses using an NLI model, wherein the plurality of NLI scores comprises an entailment score, a neutrality score and a plurality of contradiction scores;

computing (206), by the one or more hardware processors, an average NLI score based on the plurality of NLI scores associated with each of the plurality of responses;

obtaining (208), by the one or more hardware processors, a plurality of individual response predictions by classifying each of the plurality of responses based on the associated plurality of NLI scores using a hallucination classifier;

simultaneously obtaining (210), by the one or more hardware processors, an overall response prediction based on the average NLI scores associated with each of the plurality of responses using the hallucination classifier;

computing (212), by the one or more hardware processors, a confidence score for the overall response prediction of hallucination classifier based on the plurality of individual response predictions and the overall response prediction; and

predicting (214), by the one or more hardware processors, an optimal response from among the plurality of responses based on the confidence score associated with the overall response prediction of the hallucination classifier and the plurality of NLI scores, wherein the optimal response is one of: i) a response having minimum contradiction score from among the plurality of responses if the overall response prediction is hallucinated response and ii) a response having maximum entailment score from among the plurality of responses if the overall response prediction is non-hallucinated response.

2. The processor-implemented method as claimed in claim 1, wherein input to the NLI model is a premise concatenated with a hypothesis, wherein premise is a response among the plurality of responses, and hypothesis is remaining responses among the plurality of responses.

3. The processor-implemented method as claimed in claim 1, wherein each of the plurality of individual response predictions and the overall response prediction are one of a) hallucinated response and b) non-hallucinated response.

4. The processor-implemented method as claimed in claim 1, wherein the hallucination classifier is trained by:

obtaining a plurality of queries from a plurality of publicly available question-answer datasets;

generating a plurality of responses associated with each of a plurality of queries by prompting a plurality of distinct LLMs and by selecting an optimal prompting strategy from among a plurality of prompting strategies, wherein the optimal prompting strategy is selected from among the plurality of prompting strategies by:

inputting a large LLM, a query, an associated response from the plurality of distinct LLMs (R), an associated golden standard answer, a correlation score (CrS) and a certainty score (CnS) pertaining to the query;

identifying a set of prompting strategies from among the plurality of prompting strategies satisfying (i) non zero values for R, CrS and CnS and (ii) length of the sum of R, CrS and CnS equal to a predefined threshold;

computing an average score of CrS and CnS pertaining to an identified set of prompting strategies

identifying a prompting strategy from among the identified set of prompting strategies with the average score of CrS and CnS greater than a predefined average threshold as the optimal prompting strategy,

wherein a prompting strategy from among the plurality of prompting strategies with less number of input tokens is identified as the optimum prompting strategy only if (i) the average score of CrS and CnS associated with two prompting strategies from among the plurality of prompting strategies are equal and greater than the third prompting strategy from among the plurality of prompting strategies or (ii) the average score of all prompts from among the plurality of prompts are equal;

annotating each of the plurality of responses into one of a) hallucinated response and b) non-hallucinated response using a trained large LLM;

computing NLI scores associated with each of the plurality of responses; and

training the hallucination classifier based on the computed NLI scores associated with each of the plurality of responses and an annotated plurality of responses to predict hallucinated responses.

5. A system (100) comprising:

at least one memory (104) storing programmed instructions; one or more Input /Output (I/O) interfaces (112); and one or more hardware processors (102) operatively coupled to the at least one memory (104), wherein the one or more hardware processors (102) are configured by the programmed instructions to:

obtain a plurality of responses associated with a query by prompting a Large Language Model (LLM) for a plurality of instances;

compute a plurality of Natural Language Inference (NLI) scores associated with each of the plurality of responses using an NLI model, wherein the plurality of NLI scores comprises an entailment score, a neutrality score and a plurality of contradiction scores;

compute an average NLI score based on the plurality of NLI scores associated with each of the plurality of responses;

obtain a plurality of individual response predictions by classifying each of the plurality of responses based on the associated plurality of NLI scores using a hallucination classifier;

simultaneously obtain an overall response prediction based on the average NLI scores associated with each of the plurality of responses using the hallucination classifier;

compute a confidence score for the overall response prediction of hallucination classifier based on the plurality of individual response predictions and the overall response prediction; and

predict an optimal response from among the plurality of responses based on the confidence score associated with the overall response prediction of the hallucination classifier and the plurality of NLI scores, wherein the optimal response is one of: i) a response having minimum contradiction score from among the plurality of responses if the overall response prediction is hallucinated response and ii) a response having maximum entailment score from among the plurality of responses if the overall response prediction is non-hallucinated response.

6. The system of claim 5, wherein input to the NLI model is a premise concatenated with a hypothesis, wherein premise is a response among the plurality of responses, and hypothesis is remaining responses among the plurality of responses.

7. The system of claim 5, wherein each of the plurality of individual response predictions and the overall response prediction are one of a) hallucinated response and b) non-hallucinated response.

8. The system of claim 5, wherein the hallucination classifier is trained by:

obtaining a plurality of queries from a plurality of publicly available question-answer datasets;

generating a plurality of responses associated with each of a plurality of queries by prompting a plurality of distinct LLMs and by selecting an optimal prompting strategy from among a plurality of prompting strategies, wherein the optimal prompting strategy is selected from among the plurality of prompting strategies by:

inputting a large LLM, a query, an associated response from the plurality of distinct LLMs (R), an associated golden standard answer, a correlation score (CrS) and a certainty score (CnS) pertaining to the query;

identifying a set of prompting strategies from among the plurality of prompting strategies satisfying (i) non zero values for R, CrS and CnS and (ii) length of the sum of R, CrS and CnS equal to a predefined threshold;

computing an average score of CrS and CnS pertaining to an identified set of prompting strategies

identifying a prompting strategy from among the identified set of prompting strategies with the average score of CrS and CnS greater than a predefined average threshold as the optimal prompting strategy,

wherein a prompting strategy from among the plurality of prompting strategies with less number of input tokens is identified as the optimum prompting strategy only if (i) the average score of CrS and CnS associated with two prompting strategies from among the plurality of prompting strategies are equal and greater than the third prompting strategy from among the plurality of prompting strategies or (ii) the average score of all prompts from among the plurality of prompts are equal;

annotating each of the plurality of responses into one of a) hallucinated response and b) non-hallucinated response using a trained large LLM;

computing NLI scores associated with each of the plurality of responses; and

training the hallucination classifier based on the computed NLI scores associated with each of the plurality of responses and an annotated plurality of responses to predict hallucinated responses.

9. One or more non-transitory machine-readable information storage mediums comprising one or more instructions which when executed by one or more hardware processors cause:

obtaining, a plurality of responses associated with a query by prompting a Large Language Model (LLM) for a plurality of instances;

computing, a plurality of Natural Language Inference (NLI) scores associated with each of the plurality of responses using an NLI model, wherein the plurality of NLI scores comprises an entailment score, a neutrality score and a plurality of contradiction scores;

computing, an average NLI score based on the plurality of NLI scores associated with each of the plurality of responses;

obtaining, a plurality of individual response predictions by classifying each of the plurality of responses based on the associated plurality of NLI scores using a hallucination classifier;

simultaneously obtaining, an overall response prediction based on the average NLI scores associated with each of the plurality of responses using the hallucination classifier;

computing, a confidence score for the overall response prediction of hallucination classifier based on the plurality of individual response predictions and the overall response prediction; and

predicting, an optimal response from among the plurality of responses based on the confidence score associated with the overall response prediction of the hallucination classifier and the plurality of NLI scores, wherein the optimal response is one of: i) a response having minimum contradiction score from among the plurality of responses if the overall response prediction is hallucinated response and ii) a response having maximum entailment score from among the plurality of responses if the overall response prediction is non-hallucinated response.

10. The one or more non-transitory machine-readable information storage mediums of claim 9, wherein input to the NLI model is a premise concatenated with a hypothesis, wherein premise is a response among the plurality of responses, and hypothesis is remaining responses among the plurality of responses.

11. The one or more non-transitory machine-readable information storage mediums of claim 9, wherein each of the plurality of individual response predictions and the overall response prediction are one of a) hallucinated response and b) non-hallucinated response.

12. The one or more non-transitory machine-readable information storage mediums of claim 9, wherein the hallucination classifier is trained by:

obtaining a plurality of queries from a plurality of publicly available question-answer datasets;

generating a plurality of responses associated with each of a plurality of queries by prompting a plurality of distinct LLMs and by selecting an optimal prompting strategy from among a plurality of prompting strategies, wherein the optimal prompting strategy is selected from among the plurality of prompting strategies by:

inputting a large LLM, a query, an associated response from the plurality of distinct LLMs (R), an associated golden standard answer, a correlation score (CrS) and a certainty score (CnS) pertaining to the query;

identifying a set of prompting strategies from among the plurality of prompting strategies satisfying (i) non zero values for R, CrS and CnS and (ii) length of the sum of R, CrS and CnS equal to a predefined threshold;

computing an average score of CrS and CnS pertaining to an identified set of prompting strategies

identifying a prompting strategy from among the identified set of prompting strategies with the average score of CrS and CnS greater than a predefined average threshold as the optimal prompting strategy,

wherein a prompting strategy from among the plurality of prompting strategies with less number of input tokens is identified as the optimum prompting strategy only if (i) the average score of CrS and CnS associated with two prompting strategies from among the plurality of prompting strategies are equal and greater than the third prompting strategy from among the plurality of prompting strategies or (ii) the average score of all prompts from among the plurality of prompts are equal;

annotating each of the plurality of responses into one of a) hallucinated response and b) non-hallucinated response using a trained large LLM;

computing NLI scores associated with each of the plurality of responses; and

training the hallucination classifier based on the computed NLI scores associated with each of the plurality of responses and an annotated plurality of responses to predict hallucinated responses.

100

FIG. 1A

FIG. 1B

200

obtain a plurality of responses associated with a query by prompting a Large Language Model (LLM) for a plurality of instances    202

compute a plurality of Natural Language Inference (NLI) scores associated with each of the plurality of responses using an NLI model, wherein the plurality of NLI scores comprises an entailment score, a neutrality score and a plurality of contradiction scores    204

compute an average NLI score based on the plurality of NLI scores associated with each of the plurality of responses    206

obtain a plurality of individual response predictions by classifying each of the plurality of responses based on the associated plurality of NLI scores using a hallucination classifier    208

simultaneously obtain (210), an overall response prediction based on the average NLI scores associated with each of the plurality of responses using the hallucination classifier    210

A

**FIG. 2A**

200

(A)

compute a confidence score for the overall response prediction of hallucination classifier based on the plurality of individual response predictions and the overall response prediction

212

predict an optimal response from among the plurality of responses based on the confidence score associated with the overall response prediction of the hallucination classifier and the plurality of NLI scores, wherein the optimal response is one of: i) a response having minimum contradiction score among the plurality of responses if the overall response prediction is hallucinated response and ii) a response having maximum entailment score among the plurality of responses if the overall response prediction is non-hallucinated response

214

**FIG. 2B**

## EUROPEAN SEARCH REPORT

**Application Number**

EP 25 20 2328

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | ASHOK URLANA ET AL: "HalluCounter: Reference-free LLM Hallucination Detection in the Wild!", ARXIV.ORG, CORNELL UNIVERSITY LIBRARY, 201 OLIN LIBRARY CORNELL UNIVERSITY ITHACA, NY 14853, 27 May 2025 (2025-05-27), XP092038849, * section 3 * | 1-12 | INV. G06F40/30 |
| X | BAIRU HOU ET AL: "A Probabilistic Framework for LLM Hallucination Detection via Belief Tree Propagation", ARXIV.ORG, CORNELL UNIVERSITY LIBRARY, 201 OLIN LIBRARY CORNELL UNIVERSITY ITHACA, NY 14853, 11 June 2024 (2024-06-11), XP091785011, * page 5, paragraph 2 - paragraph 5 * | 1-12 | |

-----

-----

**TECHNICAL FIELDS SEARCHED (IPC)**

G06F

The present search report has been drawn up for all claims

| Place of search | Date of completion of the search | Examiner |
|---|---|---|
| Berlin | 2 March 2026 | Abram, Robert |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• IN 202421093144